# FASCICULE DE BREVET EUROPEEN

(11) **EP 0 554 202 B1**
(45) Date de publication et mention de la délivrance du brevet: **04.10.1995**
(21) Numéro de dépôt: 93500007.5
(22) Date de dépôt: 28.01.1993
(51) Int. Cl.: B65G 47/14, B65G 21/20

(54) **Machine à orienter des récipients pour station d'embouteillage**
Vorrichtung zum Orientieren von Behältern für einen Flaschenabfüller
Device for orienting containers for a bottling station

(30) Priorité: 30.01.1992 FR 9201246
(43) Date de publication de la demande: 04.08.1993
(73) Titulaire: Marti Sala, Jaime, E-08017 Barcelona (ES)
(72) Inventeur: Marti Sala, Jaime, E-08017 Barcelona (ES)
(74) Mandataire: Manresa Val, Manuel

(56) Documents cités:
- EP-A- 0 192 594
- FR-A- 2 118 880
- FR-A- 2 543 926
- SOVIET INVENTIONS ILLUSTRATED SECTION A ;PUBL DEC 1966 Derwent PublicationsLtd., London, GB;

## Description

L'invention concerne le domaine des machines à orienter des récipients, notamment des bouteilles vides en matière plastique ou des articules légers, de types et de dimensions variés, conçues pour alimenter en continu une station d'embouteillage ou un équipement similaire, du genre comportant:
a. un réceptacle, de forme et de dimensions quelconques, pour le chargement en vrac des récipients que s'accumulent sur son plan de fond;
b. des moyens pour le support des éléments qui définissent des logements pour lesdits récipients, disposés à la périphérie du fond du réceptacle, associés à des moyens de déplacement en circuit fermé;
c. des moyens d'entraînement desdits moyens de support dans ce parcours périphérique;
d. des éléments montés sur ces moyens de support et définissant des logements pour la réception des récipients dans une position bien déterminée, notamment couchés, à la périphérie de ce réceptacle;
e. un plan fixe, réglable en position par rapport auxdits éléments, destiné à maintenir au moins une partie principale du corps des récipients dans lesdits logements lorsqu'il sont entraînés par lesdits éléments qui définissent des logements se déplaçant dans la région périphérique du fond du réceptacle, ledit plan comportant une discontinuité, dans une zone de déchargement, apte à laisser passer les récipients au travers de celui-ci;
f. des moyens, appartenant auxdits éléments d'entraînement des récipients, aptes à provoquer leur basculement lors de l'interruption dudit plan de maintien, dans la zone de déchargement, et à les orienter, pendant leur chute, dans une position bien déterminé, notamment verticale;
g. une pluralité de goulottes de chute, disposées en circuit fermé, associées aux logements des récipients dans la zone de déchargement desdits récipients, pour recevoir ces derniers dans une position bien déterminée, notamment verticale, et les guider en les alignant vers une sortie.

Plus particulièrement le plan fixe est destiné à maintenir au moins une partie principale du corps des récipients.

Ledit plan se retrouve essentiellement dans les brevets et demande de brevet suivants:
- US-A-3650368 (NALBACH): paroi annulaire inclinée 82 de retenue du corps des récipients, pendant leur déplacement, interrompu en partie haute pour permettre leur passage par gravité;
- FR-A-2543926 (J.MARTI): plan annulaire incliné 14 de retenue du corps des récipients pourvu d'une ouverture de passage également en partie haute;
- FR-A-2662663 (J.MARTI): plan annulaire horizontal 11 de retenue du corps des récipients pourvu d'une ouverture de passage dans la zona de déchargement.

Dans ces différents cas, les récipients reposent seulement par gravité sur lesdits plans. Comme il s'agit essentiellement de récipients légers, leur maintien sur lesdits plans est d'autant aléatoire que les vitesses des machines sont plus élevées. D'où une limitation des vitesses de travail des machines correspondantes et une baisse de leurs performances par un taux réduit de remplissage des logements correspondants avec arrêts fréquents pour celles d'entre-elles qui ne comportent pas de dispositif d'évacuation des récipients mal positionnés.

L'invention vise à réaliser un dispositif ayant pour effet de faciliter la mise en place des récipients dans leurs logements respectifs et leur maintien dans le fond de ces derniers même à des vitesses de travail très élevées.

Pour obtenir ce résultat, ledit plan, pour le maintien des corps des récipients en position couchée dans les logements périphériques, est réalisé à partir d'un conduit relié, par des tuyaux, à des moyens générateurs d'air sous pression et pourvu, dans la paroi servant de plan de soutien aux corps des récipients, d'une pluralité d'orifices, ou perforations, aptes à coopérer, par l'air qu'ils aspirent, au positionnement et au maintien des récipients dans lesdits logements périphériques.

Selon une première variante de l'invention, ledit conduit comporte également une paroi latérale, qui constitue une partie de la paroi latérale du réceptacle au dessus du fond de ce dernier, entourant la zone périphérique d'acheminement des récipients de la zone de chargement à la zone de déchargement, qui comporte également, au voisinage et au dessus de chaque logement, une pluralité d'orifices aptes à coopérer, par l'air qu'ils aspirent, au passage des récipients à l'intérieur desdits logements et à leur maintien lors de leur déplacement vers la zone de chute.

Selon une deuxième variante de l'invention, l'air aspiré par ledit conduit est canalisé et recyclé vers un conduit d'injection pourvu d'orifices, au dessus de la zone périphérique, le long du parcours desdits logements, pour coopérer au passage et au maintien des récipients à l'intérieur desdits logements.

Les caractéristiques et les avantages de l'invention vont apparaître plus clairement à la lecture de la description détaillée qui suit d'un ou plusieurs modes de réalisation préférés de l'invention donnés à titre d'exemple seulement et représentés aux dessin annexés.

Sur ces dessins:
- la figure 1 est une vue en perspective partielle du dispositif selon l'invention adapté sur une machine du type en question;
- la figure 2 est une vue en perspective partielle d'une première variante de l'invention;
- la figure 3 est une vue en perspective partielle d'une deuxième variante de l'invention.

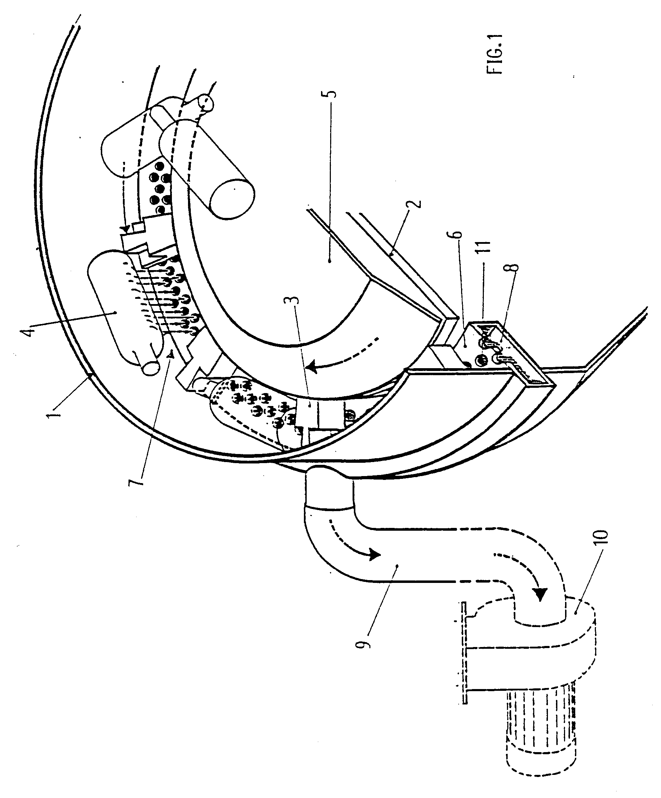

La machine représentée à la figure 1 comporte:
- un réceptacle 1 circulaire:
- un disque rotatif 2 situé dans son fond;
- des éléments 3 rapportés, définissant deux à deux des zones 7 de logement des récipients 4, fixés à la périphérie du disque 2 de manière amovible;
- un élément 5 pour déplacer et repartir les récipients comportant une surface frontale de réception des récipients introduits en vrac dans le réceptacle 1 de la machine, et une surface périphérique inclinée favorisant, en combinaison avec la rotation dudit élément 5 dans le sens inverse de celui de déplacement des logements périphériques support des récipients, la répartition desdits récipients dans lesdits logements périphériques de la zone de charge;
- un plan de soutien 6 appartenant au conduit 8 et pourvu d'orifices 11 servant, par l'air qu'ils aspirent, au positionnement et au maintien des récipients dans les logements 7, ledit conduit étant relié, par des tuyaux 9, à un générateur d'air sous pression 10.

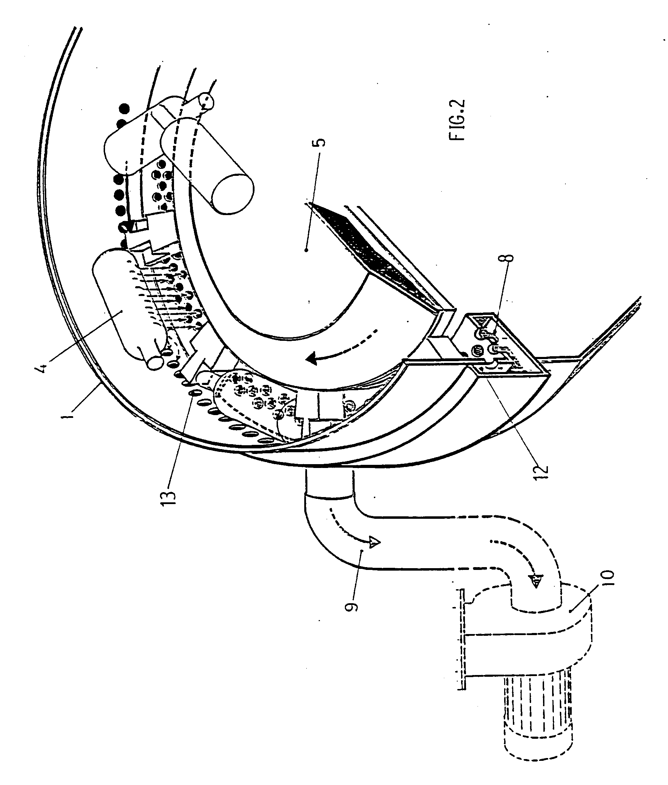

La machine représentée à la figure 2, constitue une première variante de la précédente. Dans cette machine le conduit 8 comporte une paroi latérale 12 pourvue également, au voisinage et au dessus de chaque logement d'une pluralité d'orifices 13 venant s'ajouter aux précédents 11 pour accroître les performances de la machine en question.

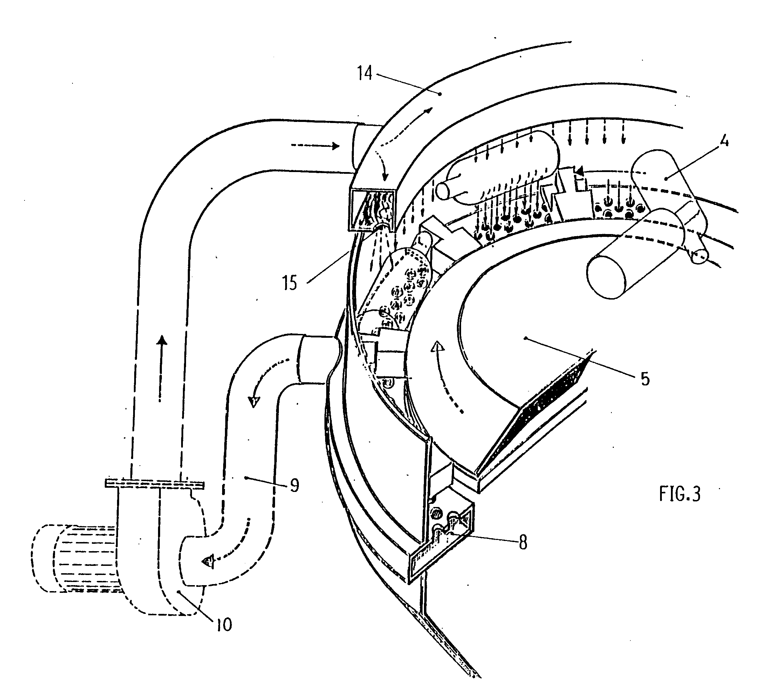

La machine représentée à la figure 3, constitue une deuxième variante de la machine de la figure 1. Dans cette machine un deuxième conduit 14, alimenté par l'air recyclé provenant du premier conduit, comportant des orifices d'injection 15, au dessus de la zone périphérique, le long du parcours desdits logements, venant coopérer au passage et au maintien des récipients dans lesdits logements.

Selon d'autres variantes de l'invention:
- chaque conduit peut être réalisé en plusieurs éléments juxtaposés;
- chaque conduit peut comporter, avant la zone de déchargement des récipients, une zone, non pourvue de perforations, correspondant à la zone d'évacuation des récipients mal positionnés.

Ces divers dispositifs peuvent s'adapter à tout type de machine destinée à orienter des récipients pour alimenter une station d'embouteillage ou un équipement similaire et en particulier les machines qui possèdent, associé au disque agitateur 5 pour déplacer et repartir les récipients solidaire de la paroi intérieure du réceptacle 1, une contreparoi destinée à coucher les récipients avant leur passage dans les logements périphériques.

## Revendications

1. Machine pour orienter des récipients (4), notamment des bouteilles vides en matière plastique ou des articles légers, de types et de dimensions variés, conçue pour alimenter en continu un station d'embouteillage ou un équipement similaire, du genre comportant:
a) un réceptacle (1), de forme et de dimensions quelconques, pour le chargement en vrac de récipients qui s'accumulent sur son plan de fond;
b) des moyens (2) pour le support des éléments (3) qui définissent des logements (7) pour lesdits récipients disposés à la périphérie du fond du réceptacle, associés à des moyens de déplacement en circuit fermé;
c) des moyens d'entraînement desdits moyens de support (2) dans ce parcours périphérique;
d) des éléments (3) montés sur ces moyens de support (2) et définissant des logements (7) pour la réception des récipients dans une position bien déterminée, notamment couchés, à la périphérie de ce réceptacle;
e) un plan de maintien fixe (6), réglable en position par rapport audits éléments, destiné à maintenir au moins une partie principale du corps des récipients dans lesdits logements lorsqu'ils sont entraînés par lesdits éléments (3) qui définissent des logements se déplaçant dans la région périphérique du fond du réceptacle (1), ledit plan (6) comportant une discontinuité, dans une zone de déchargement, apte à laisser passer les récipients au travers de celui-ci;
f) des moyens, appartenant audits éléments d'entraînement des récipients, aptes à provoquer leur basculement lors de l'interruption dudit plan de maintien dans la zone de déchargement, et à les orienter, pendant leur chute, dans une position bien déterminée, notamment verticale;
g) une pluralité de goulottes de chute, disposées en circuit fermé, associées aux logements (7) des récipients (4) dans la zone de déchargement desdits récipients, pour recevoir ces derniers dans une position bien déterminée, notamment verticale, et les guider en les alignant vers une sortie;
**caractérisée** en ce que ledit plan (6), pour le maintien des corps des récipients (4) en position couchée dans les logements périphériques (7), est réalisé à partir d'un conduit (8) relié, par des tuyaux (9), à des moyens (10), générateurs d'air sous pression, et en ce que ledit conduit (8) comporte, dans la paroi servant de plan de soutien (6) aux corps des récipients, une pluralité d'orifices (11) aptes à coopérer, par l'air qu'ils aspirent, au positionnement et au maintien des récipients (4) dans lesdits logements périphériques.

2. Machine, selon la revendication 1, caractérisée en ce que ledit conduit, qui comporte une paroi, pourvue d'une pluralité d'orifices (11), constituant le plan de maintien (6) des récipients (4) dans les logements (7) périphériques servant à leur entraînement, comporte également une paroi latérale (12), qui constitue une partie de la paroi latérale du réceptacle (1) au dessus du fond de ce dernier, entourant la zone périphérique d'acheminement des récipients de la zone de chargement à la zone de déchargement, et en ce que ladite paroi latérale (12) comporte également, au voisinage et au dessus de chaque logement, une pluralité d'orifices (13) aptes à coopérer, par l'air qu'ils aspirent, au passage des récipients à l'intérieur desdits logements et à leur maintien lors de leur déplacement vers la zone de chute.

3. Machine, selon la revendication 1, caractérisée en ce que l'air aspiré par ledit conduit (8) est recyclé et canalisé vers un conduit d'injection (14), pourvu d'orifices (15), au dessus de la zone périphérique, le long du parcours desdits logements, pour coopérer au passage des récipients (4) à l'intérieur desdits logements (7) et à leur maintien dans ces derniers.

4. Machine selon l'une quelconque des revendications précédentes, caractérisée en ce que chaque conduit (8,14) est réalisé en plusieurs éléments juxtaposés.

5. Machine, selon l'une quelconque des revendications précédentes, caractérisée en ce que chaque conduit (8,14) comporte, avant la zone de déchargement des récipients, une zone, non pourvue de perforations, correspondant à la zone d'évacuation des récipients mal positionnés.

## Claims

1. Machine for orienting containers (4), particularly empty plastic bottles or lightweight articles, which maybe of different sizes and shapes, designed for continuous feeding a bottling station or similar facility, of the type comprising:
a) a hopper (1) of any shape or dimension, provided to receive in bulk containers that are accumulated onto its bottom plane;
b) means (2) for supporting elements (3) defining receiving recesses (7) for said containers arranged at the periphery of the hopper's bottom, associated to displacement means in a closed circuit;
c) means for conveying said support means (2) in said peripheral path;
d) elements (3) attached to said support means (2) defining recesses (7) to received containers in a well defined position particularly in a lying position, at the periphery of said hopper;
e) a steady upholding shelf (6), which may be adjustable in position with regard to said elements, designed to uphold at least one main portion of the containers body inside said recesses when they are conveyed by said elements (3) forming said recesses moving along the peripheral zone of the bottom of the hopper (1), said shelf (6) having an interruption, in an unloading area suitable to allow the containers to pass therethrough;
f) means pertaining to said elements conveying the containers, suitable to cause their tilting when said shelf is interrupted in the unloading area and for orienting said container while falling, in a predetermined position mainly vertically;
g) a plurality of falling chutes, arranged in a closed circuit and associated to said recesses (7) for the containers (4), in the unloading area, for receiving said containers in a well defined position, mainly vertically, and for guiding them while aligning towards an exit;
characterised in that said shelf (6) designed to uphold the container bodies (4) in a lying position in the peripheral recesses (7), is carried out from a duct (8) connected through tubes (9) to means (10) generating a negative pressure, and in that said duct (8) is provided in the wall acting as upholding plane (6) for the container bodies with a plurality of holes (11) suitable to cooperate through the air they suck, to the positioning and upholding of the containers (4) in the said peripheral recesses.

2. Machine, as per claim 1, characterised in that said duct which comprises a wall with a plurality of holes (11) constituting the plane (6) for upholding the containers (4) housed in the peripheral recesses (7) for its conveyance comprises likewise a lateral wall (12) which constitute one part of the side wall of the hopper (1) extending above its bottom, surrounding the peripheral zone aimed to receive and conveying the containers from the loading area to the unloading area, and in that said lateral wall (12) also includes, close to and above each of the recesses, a plurality of holes (13) suitable to cooperate , through the air they suck , to the passage of the containers inside the said recesses and to keep them when moving toward the falling area.

3. Machine, as per claim 1, characterised in that the air sucked by the said duct (8) is channelled and recycled toward an injection duct (14) provided with holes (15), above the peripheral area, along the path of the said recesses, to cooperate to the passage and upholding of the containers (4) inside said recesses (7).

4. Machine, as per anyone of the previous claims, characterised in that each duct (8, 14) is carried out in several juxtaposed elements.

5. Machine, as per anyone of the previous claims, characterised in that each duct (8, 14) comprises before the containers unloading area, a sector having no perforation available, corresponding to an area of evacuation of the containers wrongly positioned.

## Patentansprüche

1. Maschine zur Ausrichtung von Behältern, ins Besondere leere Flaschen aus Kunststoff oder andere, leichte Gegenstände, verschiedener Form und Ausmaße, vorgesehen, um eine kontinuierliche Zuführung einer Abfüllanlage oder einer ähnlichen Anlage zu bewirken und welche folgende Elemente aufweist:
a) ein Sammelbecken, jeglicher Form und Ausmaßes, zur losen Aufnahme der Behälter, welche sich auf dessen Boden anhäufen;
b) Mittel zur Halterung von Elementen, die Aufnahmen von besagten Behältern darstellen, angeordnet am Umfang des Sammelbeckenbodens und welche in Verbindung zu Förderungsmitteln stehen, die sich in geschlossenem Kreislauf bewegen;
c) Mittel zur Mitnahme genannter Halterungsmittel entlang des eben angegebenen umfangsgelegenen Verlaufs;
d) Elemente, aufgebaut auf besagte Halterungsmittel, welche Aufnahmen zur Annahme der Behälter in einer bestimmten Lage, vornehmlich liegend, darstellen und sich am Umfang des erwähnten Sammelbeckens befinden;
e) eine feststehende Ebene, deren Position in Bezug zu den genannten Elementen verstellbar ist, vorgesehen, um zumindest einen Hauptteil der Behälterkörper in besagten Aufnahmen zu halten, wenn die mehrmals erwähnten Behälter von den genannten Elementen, die eine Aufnahme darstellen, mitgenommen werden und sich in einem Umfangsbereich des Sammelbeckenbodens fortbewegen, wobei obig angegebene Ebene eine Unterbrechung im Entladebereich aufweist, die einen Durchgang der Behälter durch diesen ermöglicht;
f) Mittel, die zu den erwähnten Mitnahmemittel der Behälter gehören, die ein Kippen dergleichen bei der Unterbrechung, in dem Entladebereich, obig angegebener Ebene ermöglichen und welche die Behälter bei deren Fall in eine vorgegebene Lage, ins Besondere, eine senkrechte Lage ausrichten;
g) eine Vielzahl von Fallschächten, in geschlossenem Kreislauf angeordnet, die zu den Aufnahmen der Behälter in deren Entladebereich in Verbindung stehen, um die Behälter in einer vorbestimmten Lage, ins Besondere, senkrechten Lage anzunehmen, wobei diese, gleichzeitig, geführt und zu einem Ausgang ausgerichtet werden, dadurch gekennzeichnet, daß obig erwähnte Ebene (6), zur Halterung der Behälterkörper (4) in liegender Lage in den umfangsgelegenen Aufnahmen (7), aus einer Leitung (8) besteht, die durch Röhren (9) zu Mittel (10) verbunden ist, welche Niederdruckluft erzeugen, und daß eben erwähnte Leitung an deren Wand (6), welche als Halteebene der Behälterkörper dient, eine Vielzahl von Bohrungen (11) aufweist, die, mittels der durch diesen angesogenen Luft, bei der Ausrichtung und Halterung der Behälter in den besagten umfangsgelegenen Aufnahmen behilflich sind.

2. Maschine nach Anspruch 1, dadurch gekennzeichnet, daß obig erwähnte Leitung, bestehend aus einer Wand (6), versehen mit einer Vielzahl von Bohrungen (11), die Halteebene der Behälter in deren umfangsgelegenen Aufnahmen darstellt und zu deren Mitnahme dient, ebenfalls eine Seitenwand (12) aufweist, die einen Teil der Seitenwand des Sammelbeckens, oberhalb des Bodens desgleichen, darstellt und den peripherischen Ausrichtungsbereich der Behälter, von dem Ladebereich bis zum Entladebereich umfaßt und weil eben erwähnte Seitenwand, ebenfalls, eine Vielzahl von Bohrungen (13), anliegend an den Aufnahmen und über diesen, aufweist, welche, mittels der durch diesen angesaugte Luft, zu dem Zugang der Behälter zu deren Aufnahmen und Halterung in diesen während der Fortbewegung zum Entladebereich, behilflich sind.

3. Maschine nach Anspruch 1, dadurch gekennzeichnet, daß die von besagter Leitung angesogene Luft wieder aufbereitet und in eine Einspritzleitung (14) weitergeleitet wird, welche mit einer Vielzahl von Bohrungen (15) versehen ist und über dem Umfangsbereich, entlang des Verlaufs besagter Aufnahmen, liegt, um eine Annahme und Halterung besagter Behälter in genannte Aufnahmen zu erleichtern.

4. Maschine nach einem der vorgehenden Ansprüche, dadurch gekennzeichnet, daß jede Leitung aus mehreren aneinandergereihten Elementen besteht.

5. Maschine nach einem der vorgehenden Ansprüche, dadurch gekennzeichnet, daß jede Leitung, vor dem Entladebereich der Behälter, einen Sektor aufweist, welcher frei von jeder Bohrung ist und welcher dem Entladebereich der fehlerhaft ausgerichteten Behälter entspricht.
